# EUROPEAN PATENT APPLICATION

(11) **EP 4 287 687 A1**
(43) Date of publication of application: **06.12.2023**
(21) Application number: 22745777.7
(22) Date of filing: 24.01.2022
(51) Int. Cl.: H04W 16/28, H04W 72/02, H04W 72/04, H04W 72/12

(54) **TERMINAL, WIRELESS COMMUNICATION METHOD, AND BASE STATION**

(30) Priority: 27.01.2021 JP 2021011131
(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/002334
(87) International publication number: WO 2022/163556

(57) **Abstract**

A terminal according to an aspect of the present disclosure includes: a receiving section that receives single downlink control information (DCI) for one or more uplink shared channels (Physical Uplink Shared Channels (PUSCHs)); and a control section that controls, based on one or more pieces of information indicating a transmitted precoding matrix indicator (TPMI) and a transmission rank for the PUSCH included in the DCI, use of the TPMI and the transmission rank for transmissions of a plurality of PUSCHs using a plurality of SRS resource indicators (SRIs) or a transmission(s) of one or more PUSCHs using a single SRI. According to an aspect of the present disclosure, it is possible to appropriately control PUSCH repetition transmission even in a case of multi-TRP is used.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In 3GPP Rel. 15, repetition transmission is supported for a UL data channel (for example, an uplink shared channel (Physical Uplink Shared Channel (PUSCH))). A UE performs such control as to transmit a PUSCH in each of a plurality of slots (for example, K consecutive slots), based on a repetition factor K configured by a network (for example, a base station). In other words, in a case of performing repetition transmission, each PUSCH is transmitted in a different slot (for example, on a slot basis).

Meanwhile, for Rel. 16 or later versions, it is studied to perform a plurality of PUSCH transmissions in one slot in a case of performing repetition transmission of a PUSCH. In other words, transmission of each PUSCH is performed in a unit shorter than a slot (for example, on a sub-slot basis, on a mini-slot basis).

Moreover, for Rel. 16 or later versions, it is studied to dynamically switch between a single PUSCH transmission and PUSCH repetition transmission.

For NR, communication using one or a plurality of transmission/reception points (TRPs) (multi-TRP) is studied.

However, in NR specifications so far, how to control PUSCH repetition transmission in multi-panel/TRP has not been studied sufficiently. In a case where PUSCH repetition transmission in multi-TRP is not appropriately performed, throughput may degrade, or communication quality may deteriorate.

Thus, an object of the present disclosure is to provide a terminal, a radio communication method, and a base station that can appropriately control PUSCH repetition transmission.

### Solution to Problem

A terminal according to an aspect of the present disclosure includes: a receiving section that receives single downlink control information (DCI) for one or more uplink shared channels (Physical Uplink Shared Channels (PUSCHs)); and a control section that controls, based on one or more pieces of information indicating a transmitted precoding matrix indicator (TPMI) and a transmission rank for the PUSCH included in the DCI, use of the TPMI and the transmission rank for transmissions of a plurality of PUSCHs using a plurality of SRS resource indicators (SRIs) or a transmission(s) of one or more PUSCHs using a single SRI.

### Advantageous Effects of Invention

According to an aspect of the present disclosure, it is possible to appropriately control PUSCH repetition transmission even in a case of multi-TRP is used.

### Brief Description of Drawings

FIGS. 1A and 1B are each a diagram to show an example of a PUSCH repetition transmission;
FIGS. 2A and 2B are diagrams to show an example of an invalid symbol pattern;
FIGS. 3A and 3B are diagrams to show examples of nominal repetitions and actual repetitions;
FIG. 4 is a diagram to show an example of PUSCH repetition transmission in multi-TRP;
FIG. 5 is a diagram to show an example of a configuration of a maximum value of a transmission rank according to a first embodiment;
FIGS. 6A to 6C are each a diagram to show an example of TPMI indication according to a second embodiment;
FIGS. 7A to 7C are each a diagram to show another example of the TPMI indication according to the second embodiment;
FIG. 8 is a diagram to show an example of a schematic structure of a radio communication system according to one embodiment;
FIG. 9 is a diagram to show an example of a structure of a base station according to one embodiment;
FIG. 10 is a diagram to show an example of a structure of a user terminal according to one embodiment; and
FIG. 11 is a diagram to show an example of a hardware structure of the base station and the user terminal according to one embodiment.

### Description of Embodiments

### (Repetition Transmission)

In Rel. 15, repetition transmission is supported in data transmission. For example, a base station (network (NW), gNB) repeatedly performs transmission of DL data (for example, a downlink shared channel (PDSCH)) a certain number of times. Alternatively, a UE repeatedly performs transmission of UL data (for example, an uplink shared channel (PUSCH)) a certain number of times.

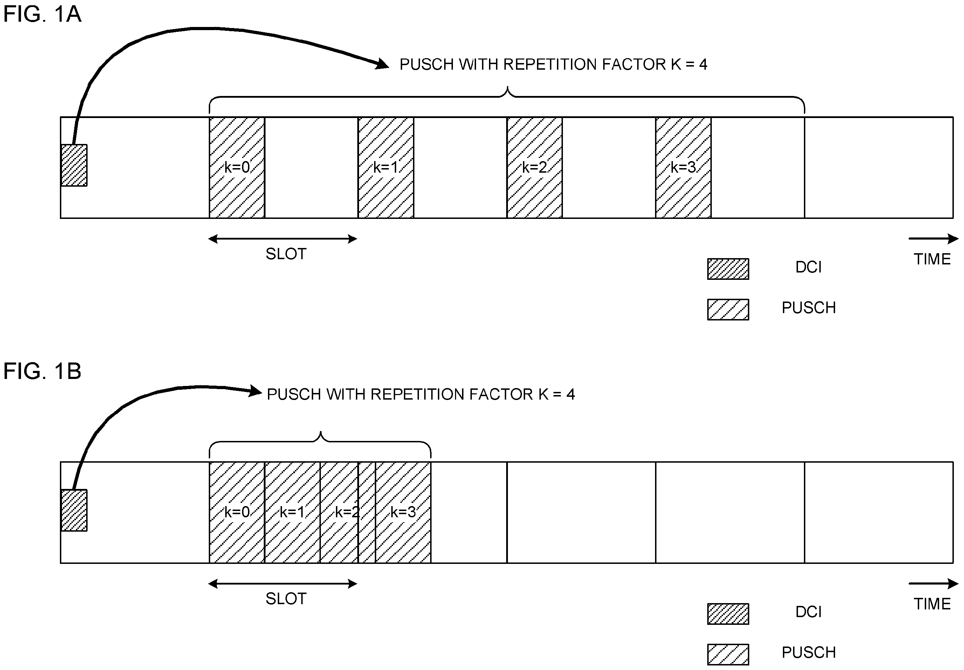

FIG. 1A is a diagram to show an example of a PUSCH repetition transmission. FIG. 1A shows an example where a PUSCH for repetition of a certain number of times is scheduled by a single piece of DCI. The number of repetitions is also referred to as a repetition factor K or an aggregation factor K.

Although the repetition factor K is 4 (K = 4) in FIG. 1A, the value of K is not limited thereto. The n-th repetition is also referred to as the n-th transmission occasion and the like and may be identified by a repetition index k (0 ≤ k ≤ K - 1). Although repetition transmission of a PUSCH (for example, a dynamic grant based PUSCH) is dynamically scheduled by the DCI in FIG. 1A, this example may be applied to repetition transmission of a configured grant based PUSCH.

For example, in FIG. 1A, the UE semi-statically receives information indicating the repetition factor K (for example, aggregationFactorUL or aggregationFactorDL) by higher layer signaling. Here, for example, the higher layer signaling may be any one or combinations of RRC (Radio Resource Control) signaling, MAC (Medium Access Control) signaling, broadcast information, and the like.

For example, the MAC signaling may use MAC control elements (MAC CE), MAC PDUs (Protocol Data Units), and the like. For example, the broadcast information may be master information blocks (MIBs), system information blocks (SIBs), minimum system information (RMSI (Remaining Minimum System Information)), and the like.

The UE controls, based on at least one of the following field values (or information indicated by the field value(s)) in the DCI, PDSCH reception processing (for example, at least one of reception, demapping, demodulation, and decoding) or PUSCH transmission processing (for example, at least one of transmission, mapping, modulation, and coding) in the K consecutive slots:
- allocation of time-domain resources (for example, a start symbol, the number of symbols in each slot, and the like)
- allocation of frequency-domain resources (for example, a certain number of resource blocks (RBs), a certain number of resource block groups (RBGs))
- modulation and coding scheme (MCS) indices
- configuration of a reference signal for demodulation (Demodulation Reference Signal (DMRS)) of the PUSCH
- spatial relation information or a state of transmission configuration indication (or transmission configuration indicator (TCI)) (TCI state (TCI-state)) of the PUSCH.

The same symbol allocation may be employed for the K consecutive slots. FIG. 1A shows a case where the PUSCH in each slot is mapped to a certain number of symbols from the beginning of the slot. The same symbol allocation may be determined for the slots as in the description of the time-domain resource allocation.

For example, the UE may determine symbol allocation in each slot, based on a start symbol S and the number L of symbols (for example, Start and Length Indicator (SLIV)) determined based on a value m of a certain field (for example, a TDRA field) in DCI. Note that the UE may determine the first slot, based on K2 information determined based on the value m of the certain field (for example, the TDRA field) in the DCI.

Meanwhile, the K consecutive slots may be the same as or at least partially be different from each other in terms of redundancy version (RV) to be used for a TB based on the same data. For example, the RV used for the TB in the n-th slot (transmission occasion, repetition) may be determined based on the value of a certain field (for example, an RV field) in the DCI.

It may be assumed that, when resources allocated in the K consecutive slots are different in terms of communication direction in at least one symbol, the communication direction including UL, DL, or flexible of each slot and being specified by at least one of uplink/downlink communication direction indication information for TDD control (for example, an RRC IE "TDD-UL-DL-ConfigCommon," "TDD-UL-DL-ConfigDedicated") and a slot format indicator of DCI (for example, DCI format 2_0), the resource of the slot including the symbol is not transmitted (or not received).

In Rel. 15, a PUSCH is repeatedly transmitted in a plurality of slots (on a slot basis) as shown in FIG. 1A. However, in Rel. 16 or later versions, it is assumed that a PUSCH is repeatedly transmitted in a unit shorter than a slot (for example, on a sub-slot basis, on a mini-slot basis, or in a unit of a certain number of symbols) (refer to FIG. 1B).

Although the repetition factor K is 4 (K = 4) in FIG. 1B, the value of K is not limited thereto. The n-th repetition is also referred to as the n-th transmission occasion and the like and may be identified by a repetition index k (0 ≤ k ≤ K - 1). Although FIG. 1B shows repetition transmission of a PUSCH (for example, dynamic grant based PUSCH) dynamically scheduled by DCI, this example may be applied to repetition transmission of a configured grant based PUSCH.

The UE may determine symbol allocation for PUSCH transmission (for example, a PUSCH of k = 0) in a certain slot, based on the start symbol S and the number L of symbols (for example, StartSymbol and length) determined based on the value m of the certain field (for example, the TDRA field) in the DCI for the PUSCH. Note that the UE may determine the certain slot, based on Ks information determined based on the value m of the certain field (for example, the TDRA field) in the DCI.

The UE may dynamically receive information indicating the repetition factor K (for example, numberofrepetitions), using downlink control information. The repetition factor may be determined based on the value m of the certain field (for example, the TDRA field) in the DCI. For example, a table in which correspondence relationships of a bit value notified using DCI, the repetition factor K, and the start symbol S and the number L of symbols is defined may be supported.

The slot-based repetition transmission shown in FIG. 1A may be referred to as repetition transmission type A (for example, PUSCH repetition Type A), and the sub-slot-based repetition transmission shown in FIG. 1B may be referred to as repetition transmission type B (for example, PUSCH repetition Type B).

The UE may be configured with use of at least one of repetition transmission type A and repetition transmission type B. For example, the UE may be notified of the repetition transmission type for the UE to use, by higher layer signaling (for example, PUSCHRepTypeIndicator) by the base station.

The UE may be configured with either repetition transmission type A or repetition transmission type B for each DCI format for scheduling a PUSCH.

For example, when higher layer signaling (for example, PUSCHRepTypeIndicator-AorDCIFormat0_1) is configured at repetition transmission type B (for example, PUSCH-RepTypeB) for a first DCI format (for example, DCI format 0_1), the UE uses repetition transmission type B for PUSCH repetition transmission scheduled using the first DCI format. Otherwise (for example, when PUSCH-RepTypeB is not configured or when PUSCH-RepTypeA is configured), the UE uses repetition transmission type A for PUSCH repetition transmission scheduled using the first DCI format.

In Rel. 16 or later versions, it is studied to perform dynamic switching between a single PUSCH transmission and PUSCH repetition transmission.

When the UE is configured with a higher layer parameter related to time-domain allocation for a PUSCH (for example, pusch-TimeDomainAllocationListDCI-0-1-r16 or pusch-TimeDomainAllocationListDCI-0-2-r16), the number of repetitions (for example, 1, 2, 3, 4, 7, 8, 12, or 16) may be configured by a parameter related to the number of repetitions of the PUSCH (for example, numberOfRepetitions-r16) included in the higher layer parameter. The UE may determine, based on the time-domain resource allocation field of the DCI, the number of repetitions of the PUSCH to be scheduled by the DCI. When the number of repetitions is configured at / indicated as one, the UE may perform a single PUSCH transmission.

### (Invalid Symbol Pattern)

It is studied that, in a case of using repetition transmission type B for PUSCH transmission, the UE is notified of information related to a symbol(s) (or a symbol pattern) unavailable for PUSCH transmission. The symbol pattern unavailable for PUSCH transmission may be referred to as an invalid symbol pattern and the like.

It is studied to notify of the invalid symbol pattern by using at least one of higher layer signaling and DCI. The DCI may be a certain DCI format (for example, at least one of DCI formats 0_1 and 0_2) .

For example, the UE is notified of information related to the invalid symbol pattern unavailable for PUSCH transmission by using a first higher layer parameter. The UE may be notified of whether or not the information related to the invalid symbol pattern is used, by using DCI. In this case, a bit field for indicating whether or not the information related to the invalid symbol pattern is used (field for notification of whether or not the invalid symbol pattern is used) may be configured in the DCI.

By using a second higher layer parameter, the UE may be notified of whether or not a field for notification (or an additional bit) is configured in the DCI. In other words, when the UE is notified of the information related to the invalid symbol pattern by the first higher layer parameter, the UE may determine whether or not the information related to the invalid symbol pattern is used, based on the second higher layer parameter and the DCI.

When the first higher layer parameter is not notified or configured, the UE may control transmission of the PUSCH without considering the invalid symbol pattern. When the first higher layer parameter is notified or configured, the UE may determine whether or not the invalid symbol pattern is used, based on the second higher layer parameter and the DCI. For example, when addition of the additional bit (or a certain field) indicating presence/absence of use of the invalid symbol patten to the DCI is indicated by the second higher layer parameter, the UE may determine whether or not the invalid symbol pattern is used, based on the certain field.

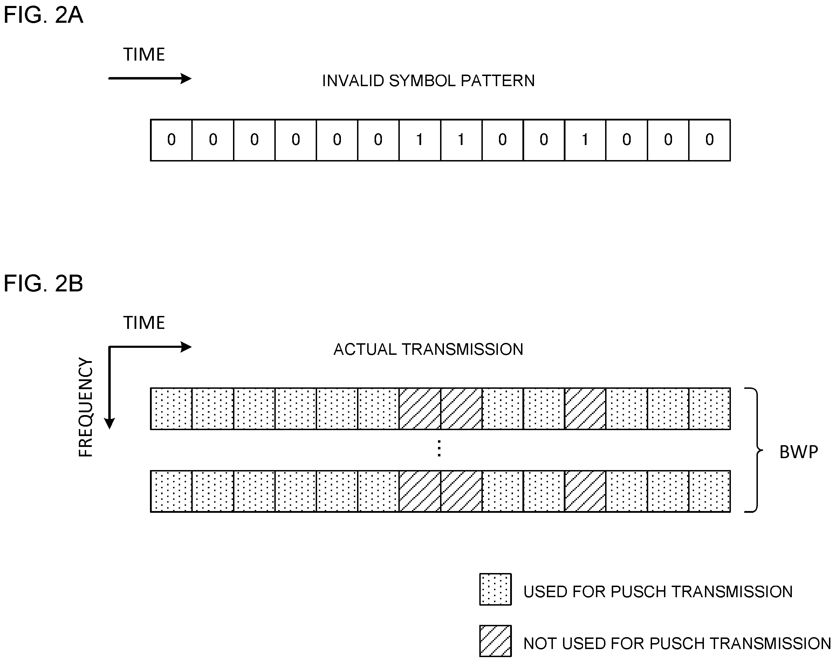

The first higher layer parameter may be any as long as being information notifying a symbol pattern invalid for the transmission of the PUSCH, and, for example, a bitmap format may be used (refer to FIG. 2A). FIG. 2A is a diagram to show an example of a case where the invalid symbol pattern is defined for the time domain by using a bitmap (1-D bitmap). The UE may determine resources available for PUSCH transmission in one or more frequency bandwidths

(for example, BWPs), based on the information related to the invalid symbol pattern (refer to FIG. 2B).

Although a case where one or a common invalid symbol pattern is used for a plurality of BWPs is shown here, a different invalid symbol pattern may be configured or used for each BWP.

### (Nominal repetitions / Actual repetitions)

In a case where repetition transmission is performed on a sub-slot basis by using repetition transmission type B, such a case that a certain repetition transmission crosses a slot-boundary may occur depending on the repetition factor (K), the unit for data mapping, and the like.

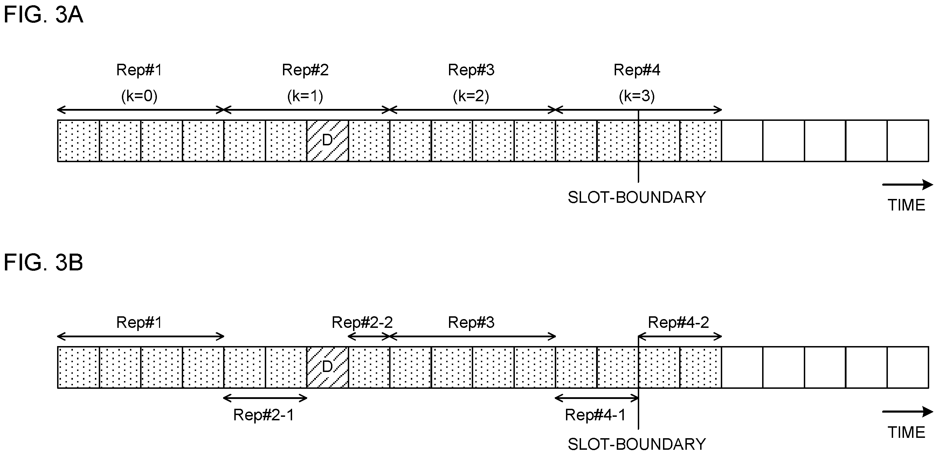

FIG. 3A shows an example of a case where repetition transmission type B when the repetition factor (K) is 4 and the PUSCH length (L) is 4 are used. In FIG. 3A, the PUSCH of k = 3 is allocated over a slot-boundary. In such a case, the PUSCH may be divided (or segmented) along the slot-boundary for transmission (refer to FIG. 3B).

Such a case is also assumed that a symbol unavailable for PUSCH transmission (for example, a DL symbol, an invalid symbol, or the like) is included in a slot. FIG. 3A shows a case where a symbol unavailable for the PUSCH transmission (here, a DL symbol) is included in part of symbols where the PUSCH of k = 1 is allocated. In such a case, the PUSCH transmission may be performed by using the symbols excluding the DL symbol (refer to FIG. 3B).

In a case where a DL symbol (or an invalid symbol) is included in the symbols to which a certain PUSCH is allocated excluding both the first and last symbols, the PUSCH transmission may be performed by using the symbols other than the DL symbol part. In this case, the PUSCH may be divided (or segmented).

FIG. 3B shows a case where a PUSCH of k = 1 (Rep #2) is divided into two (Reps #2-1 and #2-2) by a DL symbol and a PUSCH of k = 3 (Rep #4) is divided into two (Reps #4-1 and #4-2) by a slot-boundary, in sub-slot based repetition transmission.

Note that repetition transmissions before a DL symbol, an invalid symbol, or a slot-boundary is considered (FIG. 3A) may be referred to as nominal repetitions. Repetition transmission with a DL symbol, an invalid symbol, or a slot-boundary being considered (FIG. 3B) may be referred to as actual repetitions.

### (Spatial Relation for SRS and PUSCH)

In Rel-15 NR, the UE may receive information to be used for transmission of a reference signal for measurement (for example, a sounding reference signal (SRS)) (SRS configuration information, for example, a parameter in an RRC configuration element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may relate to a certain number of SRS resources (may group the certain number of SRS resources). Each SRS resource may be specified by an SRS resource indicator (SRI) or an SRS resource ID (Identifier).

The SRS resource set information may include information of an SRS resource set ID (SRS-ResourceSetId), a list of SRS resource IDs (SRS-ResourceId) used in the resource set, an SRS resource type (for example, any of a periodic SRS, a semi-persistent SRS, and an aperiodic SRS), and usage of the SRS.

Here, the SRS resource type may indicate any of a periodic SRS (P-SRS), a semi-persistent SRS (SP-SRS), and an aperiodic SRS (A-SRS). Note that the UE may transmit a P-SRS and an SP-SRS periodically (or periodically after activation) and transmit an A-SRS, based on an SRS request of DCI.

The usage (an RRC parameter "usage," an L1 (Layer-1) parameter "SRS-SetUse") may be, for example, beam management (beamManagement), codebook (CB), non-codebook (noncodebook (NCB)), antenna switching, or the like. An SRS having codebook or non-codebook usage may be used for determination of a precoder for codebook based or non-codebook based PUSCH transmission based on an SRI.

For example, in a case of codebook based transmission, the UE may determine a precoder for PUSCH transmission, based on an SRI, a transmitted rank indicator (TRI), and a transmitted precoding matrix indicator (TPMI). In a case of non-codebook based transmission, the UE may determine a precoder for PUSCH transmission, based on an SRI.

The SRS resource information may include an SRS resource ID (SRS-ResourceId), the number of SRS ports, an SRS port number(s), transmission Comb, SRS resource mapping (for example, a time and/or frequency resource location, a resource offset, resource periodicity, the number of repetitions, the number of SRS symbols, an SRS bandwidth, and the like), hopping related information, an SRS resource type, a sequence ID, spatial relation information of the SRS, and the like.

The spatial relation information of the SRS (for example, an RRC information element "spatialRelationInfo") may indicate spatial relation information between a certain reference signal and the SRS. The certain reference signal may be at least one of a synchronization signal / broadcast channel (Synchronization Signal Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the certain reference signal.

Note that, in the present disclosure, an SSB index, an SSB resource ID, and an SSB Resource Indicator (SSBRI) may be interpreted interchangeably. A CSI-RS index, a CSI-RS resource ID, and a CSI-RS Resource Indicator (CRI) may be interpreted interchangeably. An SRS index, an SRS resource ID and an SRI may be interpreted interchangeably.

The spatial relation information of the SRS may include a serving cell index, a BWP index (BWP ID), and the like corresponding to the certain reference signal.

When spatial relation information related to an SSB or a CSI-RS and an SRS for a certain SRS resource is configured, the UE may transmit the SRS resource by using the same spatial domain filter (spatial domain transmission filter) as the spatial domain filter (spatial domain receive filter) for reception of the SSB or the CSI-RS. In this case, the UE may assume that a UE receive beam for the SSB or the CSI-RS and a UE transmit beam for the SRS are the same.

When, for a certain SRS (target SRS) resource, a spatial relation information related to another SRS (reference SRS) and the SRS for the certain SRS (target SRS) is configured, the UE may transmit the target SRS resource by using the same spatial domain filter (spatial domain transmission filter) as the spatial domain filter (spatial domain transmission filter) for transmission of the reference SRS. In other words, in this case, the UE may assume that a UE transmit beam for the reference SRS and a UE transmit beam for the target SRS are the same.

The UE may determine, based on the value of a certain field (for example, an SRS resource indicator (SRI) field) in DCI (for example, DCI format 0_1), a spatial relation of a PUSCH to be scheduled by the DCI. Specifically, the UE may use the spatial relation information of the SRS resource (for example, the RRC information element "spatialRelationInfo") determined based on the value of the certain field (for example, the SRI), for PUSCH transmission.

When codebook based transmission is used for the PUSCH, the UE may be configured with two SRS resources per SRS resource set by RRC and indicated with one of the two SRS resources by DCI (the SRI field of one bit). When non-codebook based transmission is used for the PUSCH, the UE may be configured with four SRS resources per SRS resource set by RRC and indicated with one of the four SRS resources by DCI (the SRI field of two bits).

### (TPMI and Transmission Rank)

In Rel. 16, it is studied that a transmitted precoding matrix indicator (TPMI) and a transmission rank for codebook based PUSCH transmission are indicated by a specific field (for example, precoding information and a layer number field) included in downlink control information (for example, DCI format 0_1). Note that in the present disclosure, a rank and a layer may be interpreted interchangeably.

A precoder used by the UE for codebook based PUSCH transmission may be selected from an uplink codebook having the number of antenna ports equal to the value configured by a higher layer parameter (for example, nrofSRS-Ports) configured for an SRS resource.

The size (the number of bits) of the specific field is variable depending on the number of antenna ports for the PUSCH (for example, the number of ports indicated by nrofSRS-Ports above) and some higher layer parameters.

When a higher layer parameter (for example, txConfig) configured for the UE is configured at non-codebook (nonCodebook), the specific field may be zero bit.

When a higher layer parameter (for example, txConfig) configured for the UE is configured at codebook, the specific field may be zero bit for one antenna port.

When a higher layer parameter (for example, txConfig) configured for the UE is configured at codebook, the specific field may have a bit length of two to six bits for four antenna pots, based on at least one of another higher layer parameter configured for the UE or presence/absence (enabled or disabled) of a transform precoder.

When a higher layer parameter (for example, txConfig) configured for the UE is configured at codebook, the specific field may have a bit length of one to four bits for two antenna ports, based on at least one of another higher layer parameter configured for the UE or presence/absence (enabled or disabled) of a transform precoder.

Such another higher layer parameter may be at least one of a parameter for indicating a UL full power transmission mode(for example, ul-FullPowerTransmission, ul-FullPowerTransmission-r16), a parameter indicating the maximum value of a transmission rank for UL (for example, maxRank), a parameter indicating a subset of certain precoding matrix indicators (PMIs) (for example, codebookSubset), and a parameter for indicating a transform precoder (for example, transformPrecoder) .

### (Multi-TRP)

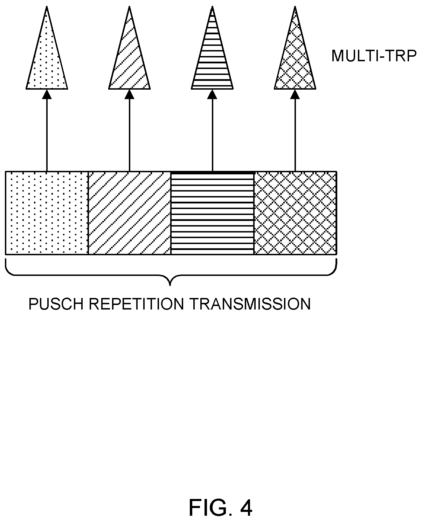

For NR, it is studied that one or a plurality of transmission/reception points (TRPs) (multi-TRP) perform DL transmission to a UE by using one or a plurality of panels (multi-panel). It is also studied that a UE performs UL transmission for one or a plurality of TRPs (refer to FIG. 4).

The plurality of TRPs may correspond to the same cell identifier (ID) or may correspond to different cell IDs. The cell ID(s) may be a physical cell ID(s) or may be a virtual cell ID(s).

On the other hand, for NR of Rel. 17 or later versions, it is studied to indicate a plurality (for example, two) of SRIs/TPMIs by using a single piece of DCI for performing PUSCH repetition transmission of a plurality of TRPs.

In a case where the single piece of DCI indicates a plurality of TPMIs, Option 1 or Option 2 below is considered;
- Option 1: by using fields indicating a plurality (for example, two) of TPMIs, TPMIs (values) for a plurality (for example, two) of TRPs are indicated
- Option 2: a field indicating one TPMI is indicated, and a codepoint corresponding to values of a plurality (for example, two) of TPMIs are configured in the field indicating the TPMI

In Option 1, the codepoint of each of the plurality of TPMI fields may correspond to the value of one TPMI. The correspondence (association) between the TPMI field and the value of the TPMI may be defined in a specification in advance. The correspondence (association) between the TPMI field and the value of the TPMI may use a correspondence defined in Rel. 16 or previous versions or may be a correspondence defined in Rel. 17 or later versions. The correspondence between the TPMI field and the value of the TPMI may be different for each of the plurality of TPMI fields.

In Option 2, the codepoint indicating one TPMI field may correspond to the values of the plurality (for example, two) of TPMIs. The correspondence (association) between the TPMI field and the value of the TPMI may be defined in a specification in advance or notified/configured/activated by RRC signaling / a MAC CE.

Meanwhile, indicating a plurality of TPMIs may increase signaling overhead of DCI. In NR of Rel. 17 or later versions, it is studied to limit a transmission rank of a PUSCH in PUSCH repetition transmission using a plurality of TRPs, in order to suppress such an increase in overhead of DCI. For example, it is studied to limit the maximum transmission rank of a PUSCH to a specific value (for example, two) or the number of candidates for a TPMI value, in PUSCH repetition transmission using a plurality of TRPs. By limiting the maximum transmission rank of PUSCH transmission of a plurality of TRPs / each of the plurality of TPPs, the number of fields of DCI necessary for PUSCH repetition transmission using the plurality of TRPs can be reduced.

However, it is not sufficiently studied, for a case of limiting the maximum rank / the candidate TPMI values of PUSCH repetition transmission using a plurality of TRPs, in a state of dynamically switching use of a single TRP and use of a plurality of TRPs, about the maximum rank / candidate TPMI values to be limited and a method of indication to a UE.

More specifically, it is not sufficiently studied, for a state of limiting the maximum rank / the candidate TPMI values of PUSCH repetition transmission using a plurality of TRPs, in a state of dynamically switching between use of a single TRP and use of a plurality of TRPs (for example, the maximum rank is limited to a specific number (for example, 2)), whether the maximum rank / candidate TPMI values of a single PUSCH transmission / PUSCH repetition transmission using a single TRP are the same as the maximum rank / candidate TPMI values of PUSCH repetition transmission using a plurality of TRPs or different from the maximum rank / candidate TPMI values of PUSCH repetition transmission using a plurality of TRPs.

Moreover, it is not sufficiently studied, in a case where the maximum rank / candidate TPMI values of a single PUSCH transmission / PUSCH repetition transmission using a single TRP are different from the maximum rank / candidate TPMI values of PUSCH repetition transmission using a plurality of TRPs, how to indicate, to the UE, a TPMI field for a single PUSCH transmission / PUSCH repetition transmission using a single TRP and a TPMI field for PUSCH repetition transmission using a plurality of TRPs (how the UE is to interpret the indication received). If these studies are not sufficient, PUSCH repetition transmission in a plurality of TRPs is not appropriately performed, which may cause throughput to degrade or communication quality to deteriorate to consequently increase signaling overhead of DCI.

Thus, the inventors of the present invention came up with the idea of a method of controlling PUSCH repetition transmission for solving the above problem. More specifically, the inventors of the present invention came up with the idea of a control method considering that transmission using a single TRP and transmission using a plurality of TRPs are different from each other in maximum rank.

Embodiments according to the present disclosure will be described in detail with reference to the drawings as follows. The radio communication methods according to respective embodiments may be employed individually, or may be employed in combination.

Note that, in the present disclosure, a port, a panel, a beam, an Uplink (UL) transmission entity, a TRP, spatial relation information (SRI), a spatial relation, a control resource set (CORESET), a PDSCH, a codeword, a base station, a certain antenna port (for example, a demodulation reference signal (DMRS) port), a certain antenna port group (for example, a DMRS port group), a certain group (for example, a code division multiplexing (CDM) group, a certain reference signal group, a CORESET group, a panel group, a beam group, a spatial relation group, a PUCCH group), and a CORESET pool may be interpreted interchangeably. The panel Identifier (ID) and a panel may be interpreted interchangeably. A TRP ID and a TRP may be interpreted interchangeably.

In the present disclosure, an index, an ID, an indicator, and a resource ID may be interpreted interchangeably.

In the present disclosure, "A/B" and "at least one of A and B" may be interpreted interchangeably. In the present disclosure, "A/B/C" may mean "at least one of A, B, and C."

In the present disclosure, a list, a group, a cluster, a subset, and the like may be interpreted interchangeably. In the present disclosure, spatial relation information (SRI), an SRS resource indicator (SRI) (or an SRI field), an SRS resource, a precoder, and the like may be interpreted interchangeably.

In the present disclosure, spatial relation information (SRI), a combination of pieces of SRI, SRI for codebook based transmission, a combination of pieces of non-codebook based SRI, spatialRelationInfo, a UL TCI, a TCI state, a Unified TCI, QCL, and the like may be interpreted interchangeably.

In the present disclosure, a first TRP and a second TRP may be interpreted as a first PUSCH and a second PUSCH, a first PUSCH transmission occasion and a second PUSCH transmission occasion, a first SRI and a second SRI, and the like, and vice versa.

In the present disclosure, a transmission rank, a maximum value of a transmission rank, a maximum value of a transmission rank, the number of TPMI candidates, the number of TPMIs, the maximum number of TPMIs, a transmission rank for UL, the maximum value of a transmission rank for UL, and the like may be interpreted interchangeably.

PUSCH repetition transmission using a plurality of TRPs in the following embodiments may be interpreted as PUSCH transmission using a plurality of TRPs, PUSCH repetition transmission for a plurality of TRPs, PUSCHs of a plurality of TRPs, repeated PUSCHs of a plurality of TRPs, simply repeated PUSCHs, repetition transmission, a plurality of PUSCH transmissions, PUSCH transmission using a plurality of SRIs, and the like, and vice versa.

PUSCH transmission using a single TRP may be referred to as PUSCH transmission using a single TRP, PUSCH repetition transmission for a single TRP, PUSCHs of a single TRP, repeated PUSCHs of a single TRP, a single PUSCH transmission for a single TRP, simply a single PUSCH transmission, PUSCH transmission in a single TRP, PUSCH transmission using a single piece of SRI, and the like.

In the present disclosure, a correspondence relationship between a codepoint of a TPMI field and a value of a TPMI related to a PUSCH using a single TRP may be referred to as a first correspondence relationship related to the TPMI, a first correspondence relationship, and the like. A correspondence relationship between a codepoint of a TPMI field and a value of a TPMI related to a PUSCH using a plurality of TRPs may be referred to as a second correspondence relationship related to the TPMI, a second correspondence relationship, and the like.

In the present disclosure, PUSCH repetition transmission for a single TRP may mean a plurality of PUSCH repetition transmissions transmitted by using the same SRI/beam/precoder.

Note that, although a description will be given of PUSCH transmission for a single / plurality of TRPs using one piece of DCI and codebook based PUSCH transmission as an example of UL transmission in each of the embodiments of the present disclosure, each of the embodiments may be applied to non-codebook based PUSCH transmission, and PUSCH transmission to which each of the embodiments is applicable is not limited to these. In a case of applying each of the embodiments of the present disclosure to non-codebook based PUSCH transmission, one or more SRS resources (SRIs) may be indicated to the UE by each SRI field. A common embodiment or different embodiments may be applied to codebook based PUSCH transmission and non-codebook based PUSCH transmission. UL transmission is not limited to a PUSCH, and each of the embodiments of the present disclosure is also applicable to a PUCCH appropriately (a PUSCH may be interpreted as a PUCCH).

In each of the embodiments of the present disclosure, a description is given of a case where the number of a plurality of TRPs, the number of a plurality of SRIs, and the like are two as a main example, but these numbers may be three or more. "Dynamic switch" in the present disclosure may mean "switch using at least one of higher layer signaling and physical layer signaling." "Switch" in the present disclosure may be interpreted as switching, change, changing, use, indicate, configure, and the like, and vice versa.

Note that, in the present disclosure, a single PUSCH transmission / PUSCH repetition transmission using a single TRP and PUSCH repetition transmission using a plurality of TRPs may dynamically indicated/switched by DCI. The dynamic switch may use a specific field included in DCI defined in Rel. 16 or previous versions or a specific field defined in Rel. 17 or later versions.

### (Radio Communication Method)

### <First Embodiment>

The UE may be configured with / notified of a maximum value of a transmission rank (layer) for UL by using higher layer signaling in codebook based PUSCH transmission. The configuration/notification of the maximum of the transmission rank for UL may use a specific higher layer parameter (for example, maxRank included in PUSCH-Config).

The configuration/notification of the max of the transmission rank for UL for the UE may be performed according to at least one of Embodiments 1-1 and 1-2 below.

### <<Embodiment 1-1>>

A single maximum value of the transmission rank for UL may be configured for the UE. The UE may receive information indicating the maximum value of the transmission rank for UL configured with a single value, by using higher layer signaling.

The information indicating the maximum value of the transmission rank for UL may be a higher layer parameter of Rel. 15/16 (for example, maxRank included in PUSCH-Config) or may be a specific higher layer parameter defined in Rel. 17 or later versions.

The UE may use the maximum value of transmission rank for UL thus configured, for both a single PUSCH transmission / PUSCH repetition transmission using a single TRP and PUSCH repetition transmission using a plurality of TRPs.

In Embodiment 1-1, when PUSCH repetition transmission using a plurality of TRPs is configured for the UE, a value of a transmission rank for UL may be limited. For example, the value of the transmission rank for UL may be determined from a first number of candidates (for example, one or two) or may be determined from a number (for example, one, two, or three) greater than the first number of candidates.

In Embodiment 1-1, the UE may be notified of the information indicating the maximum value of a transmission rank for UL transmission using a plurality of TRPs, by using higher layer signaling, and may be notified of the information indicating a transmission rank equal to or smaller than the maximum value by using DCI.

### <<Embodiment 1-2>>

The UE may be separately (independently) configured with a maximum value of a transmission rank for UL transmission using a single TRP and a maximum value of a transmission rank for UL transmission using a plurality of TRPs. The UE may receive information indicating the maximum value of a transmission rank for UL transmission using a single TRP and the information indicating the maximum value of a transmission rank for UL transmission using a plurality of TRPs, by using higher layer signaling.

The information indicating the maximum value of a transmission rank for UL transmission using a single TRP may be a higher layer parameter of Rel. 15/16 (for example, maxRank included in PUSCH-Config) or may be a specific higher layer parameter defined in Rel. 17 or later versions. The information indicating the maximum value of a transmission rank for UL transmission using a plurality of TRPs may be a specific higher layer parameter defined in Rel. 17 or later versions.

The UE may determine the transmission rank for UL transmission using a plurality of TRPs, based on the maximum value of the transmission rank for the UL transmission using the plurality of TRPs. The UE may determine the value of the transmission rank for UL for PUSCH repetition transmission using the plurality of TRPs, from the first number of candidates (for example one or two). For example, the UE may be notified of the information indicating the maximum value of the transmission rank for the UL transmission using the plurality of TRPs, by using higher layer signaling, and may be notified of the information indicating a transmission rank equal to or smaller than the maximum value by using DCI.

The UE may determine the value of the UL transmission rank for PUSCH repetition transmission using the plurality of TRPs, from a second number of candidates (for example one, two, three, or four). In this case, the UE may be configured with the second number of candidates being limited (or part of the second number of candidates). By limiting the transmission rank for PUSCH repetition using a plurality of TRPs, it is possible to reduce a signaling overhead of DCI. Whether to limit the transmission rank for PUSCH repetition using a plurality of TRPs may depend on the configuration for the UE.

The UE may determine a transmission rank for UL transmission using a single TRP, based on the maximum value of the transmission rank for the UL transmission using the single TRP. The UE may determine the value of the UL transmission rank for a single PUSCH transmission / PUSCH repetition transmission using a single TRP, from the second number of candidates (for example one, two, three, or four).

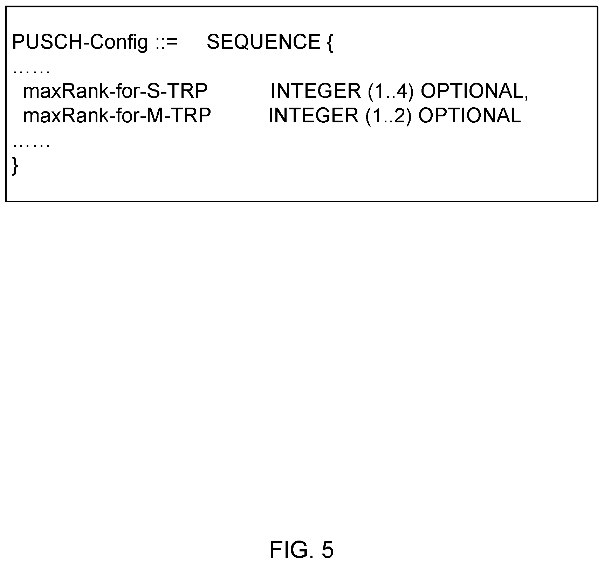

FIG. 5 is a diagram to show an example of a configuration of a maximum value of a transmission rank according to the first embodiment. The example shown in FIG. 5 shows information elements (for example, RRC information elements) for configuring for the UE / notifying the UE of a transmission rank for UL transmission. FIG. 5 shows the content of Embodiment 1-2 above. In FIG. 5, information related to a PUSCH configuration (here, PUSCH-Config) includes information indicating the maximum value of a transmission rank for UL transmission using a single TRP (here, maxRank-for-S-TRP) and information indicating the maximum value of a transmission rank for UL transmission using a plurality of TRPs (maxRank-for-M-TRP). The UE determines a transmission rank for UL transmission using a single TRP, based on maxRank-for-S-TRP while determining a transmission rank for UL transmission using a plurality of TRPs, based on maxRank-for-M-TRP.

Note that the UE need necessarily not assume/expect to receive DCI indicating a value of a transmission rank exceeding the maximum value of the transmission rank configured by higher layer signaling. When the UE receives DCI indicating a value exceeding the maximum value of the transmission rank configured by higher layer signaling, the UE may ignore the indication.

According to the first embodiment above, it is possible to use a limited transmission rank to each of UL transmission using a single TRP and UL transmission using a plurality of TRPs.

### <Second Embodiment>

The UE may assume that a correspondence relationship between a codepoint of a TPMI field and a value of a TPMI related to a PUSCH using a single TRP (first correspondence relationship) and a correspondence relationship between a codepoint of a TPMI field and a value of a TPMI related to a PUSCH using a plurality of TRPs (second correspondence relationship) are different from each other in codebook based PUSCH transmission. In other words, the UE may determine a TPMI to be used for a PUSCH using a single TRP, based on the first correspondence relationship while determining a TPMI to be used for a PUSCH using a plurality of TRPs, based on the second correspondence relationship.

### <<Embodiment 2-1>>

When the UE is indicated with PUSCH repetition transmission using a plurality of TRPs, the UE may indicate a plurality of TPMIs by using a single piece of DCI according to at least one of Option 1 and Option 2 above. The UE may use the first correspondence relationship and the transmission rank for UL transmission configured for PUSCH repetition transmission using a plurality of TRPs, to the PUSCH transmission using the plurality of TRPs.

Note that, in this embodiment, determination/use of a transmission rank for UL transmission may be performed according to the method described in the first embodiment above.

### <<Embodiment 2-2>>

When the UE is indicated with PUSCH repetition transmission using a single TRP, the UE may be indicated with one or a plurality of TPMIs by using a single piece of DCI according to at least one of Option 1 and Option 2 above. The UE may use the first correspondence relationship and the transmission rank for UL transmission configured for PUSCH transmission using a single TRP, for the PUSCH transmission using the single TRP.

### {Embodiment 2-2-1}

In Embodiment 2-2-1, as described in Option 1 above, the UE may be notified of fields indicating a plurality (for example, two) of TPMIs (which may be referred to as an indication field below).

For example, the UE may assume that codepoints for indicating the plurality (for example, two) of TPMIs are determined by a combination of codepoints of the field (indication field) indicating the plurality of TPMIs. For example, the UE may determine that a most significant bit(s) (MSB(s)) of a specific number (for example, two) of the codepoint of the indication field corresponds to a first TPMI field for a first TRP. The UE may determine that a least significant bit(s) (LSB(s)) of a specific number (for example, two) of the codepoint of the indication field corresponds to a second TPMI field for a second TRP. In this case, the UE may determine TPMIs to use, by using correspondence between the combined codepoints and TPMI values.

Note that, in the present disclosure, an MSB and an LSB may be interpreted interchangeably. In the present disclosure, an example of a combination of codepoints indicating two TPMIs is shown. However, the indication field may be constituted of a combination of codepoints indicating three or more TPMIs. In a case where the indication field is constituted of a combination of code points indicating three or more TPMIs, the codepoints in the indication field may be divided every certain number (for example, two), and the UE may determine the N-th (N is an integer) codepoint is the N-th TPMI for the N-th TRP.

Each of the plurality of codepoints constituting the indication field and indicating the plurality of TPMIs may correspond to one TPMI (value).

The correspondence (association) between the TPMI field and the value of the TPMI may be defined in a specification in advance, may use a correspondence defined in Rel. 16 or previous versions, or may be a correspondence defined in Rel. 17 or later versions.

### {Embodiment 2-2-2}

In Embodiment 2-2-2, as described in Option 2 above, the UE may be notified of a field indicating one TPMI (which may be referred to as an indication field below).

The codepoint indicating the one TPMI may correspond to one TPMI (value).

The correspondence (association) between the TPMI field and the value of the TPMI may be defined in a specification in advance, may use a correspondence defined in Rel. 16 or previous versions, or may be a correspondence defined in Rel. 17 or later versions.

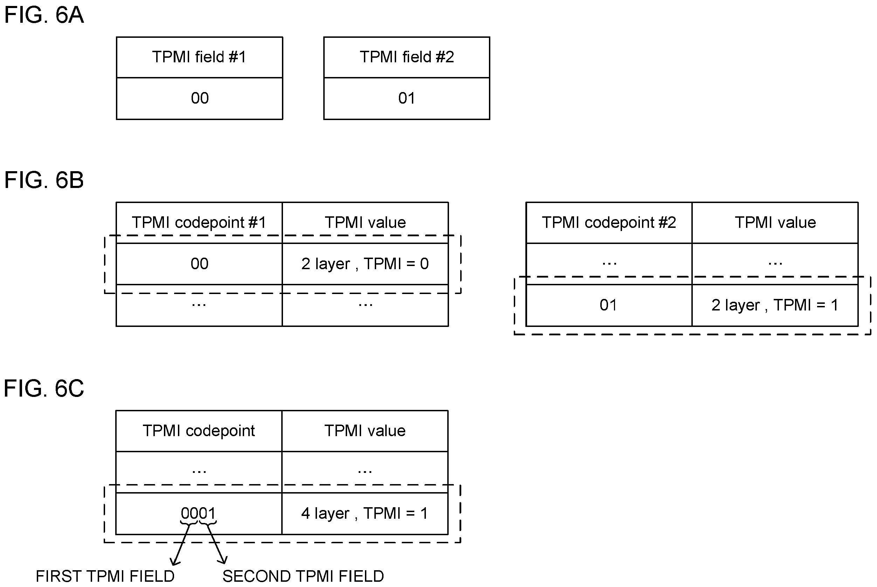

FIGS. 6A to 6C are each a diagram to show an example of TPMI indication according to the second embodiment. As shown in FIG. 6A, two TPMI fields (TPMI field #1 and TPMI field #2) are indicated to the UE by a network (NW, for example, a base station).

When the UE receives an indication as that shown in FIG. 6A and thereby being indicated with PUSCH repetition transmission using a plurality of TRPs, the UE uses a correspondence relationship between a TPMI codepoint and a TPMI value corresponding to each of the TRPs as that shown in FIG. 6B, to determine a transmission rank and a TPMI value. In the example shown in FIGS. 6A and 6B, the UE is indicated with "00" as TPMI field (codepoint) #1 and "01" as TPMI field (codepoint) #2. The UE determines the transmission rank and the TPMI to be used for UL transmission using TRP #1 to be "2 layer, TPMI = 0," from the correspondence relationship between the TPMI codepoint and the TPMI value related to TRP #1. The UE determines the transmission rank and the TPMI to be used for UL transmission using TRP #2 to be "2 layer, TPMI = 1," from the correspondence relationship between the TPMI codepoint and the TPMI value related to TRP #2.

Note that, although the correspondence relationships between a TPMI codepoint and a TPMI value corresponding to different TRPs are separately described in the example shown in FIG. 6B, a correspondence relationship common to the TRPs may be used.

When the UE receives an indication as that shown in FIG. 6A and thereby being indicated with PUSCH repetition transmission using a single TRP, the UE uses a correspondence relationship between a TPMI codepoint and a TPMI value corresponding to a single TRP as that shown in FIG. 6C, to determine a transmission rank and a TPMI value. In the example shown in FIGS. 6A and 6C, the UE is indicated with "00" as TPMI field (codepoint) #1 and "01" as TPMI field (codepoint) #2. The UE judges two MSB bits of the TPMI codepoint (here, four bits) of the correspondence relationship between a TPMI codepoint and a TPMI value, as a first TPMI field. The UE judges two LSB bits of the TPMI codepoint of the correspondence relationship between a TPMI codepoint and a TPMI value, as a second TPMI field. In other words, the UE judges the TPMI codepoint of the correspondence relationship between the TPMI codepoint and the TPMI value is to be "0001" and determines the transmission rank and the TPMI to be used for UL transmission to be "4 layer, TPMI = 1," from the correspondence relationship.

Note that the correspondence relationships between the TPMI codepoint and the TPMI value in each of the drawings in the present disclosure is merely an example, and the number of codepoints, the number of bits of each code point, parameter values, and the like are not limited to these.

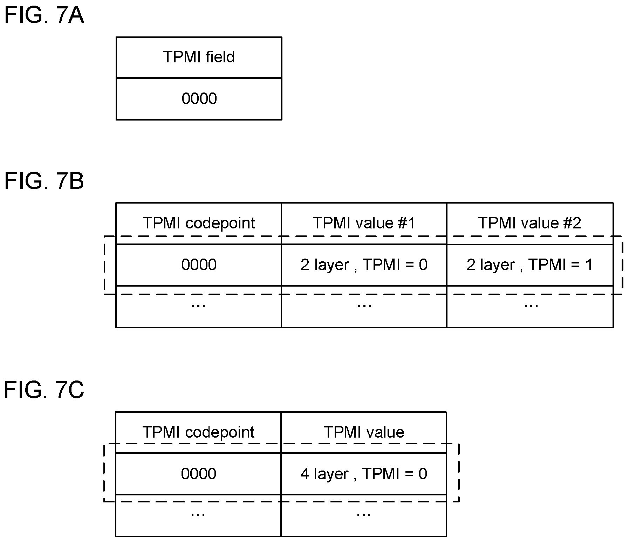

FIGS. 7A to 7C are each a diagram to show another example of the TPMI indication according to the second embodiment. As shown in FIG. 7A, one TPMI field is indicated to the UE by a network (NW, for example, a base station).

When the UE receives an indication as that shown in FIG. 7A and thereby being indicated with PUSCH repetition transmission using a plurality of TRPs, the UE uses a correspondence relationship between a TPMI codepoint and a TPMI value corresponding to each of the TRPs as that shown in FIG. 7B, to determine a transmission rank and a TPMI value. In the example shown in FIGS. 7A and 7B, the UE is indicated with "0000" as a TPMI field (codepoint). The UE determines the transmission rank and the TPMI (TPMI value #1) to be used for UL transmission using TRP #1 to be "2 layer, TPMI = 0," from the correspondence relationship. The UE determines the transmission rank and the TPMI (TPMI value #2) to be used for UL transmission using TRP #2 to be "2 layer, TPMI = 1," from the correspondence relationship.

When the UE receives an indication as that shown in FIG. 7A and thereby being indicated with PUSCH repetition transmission using a single TRP, the UE uses a correspondence relationship between a TPMI codepoint and a TPMI value corresponding to a single TRP as that shown in FIG. 7C, to determine a transmission rank and a TPMI value. In the example shown in FIGS. 7A and 7C, the UE is indicated with "0000" as a TPMI field (codepoint). The UE determines the transmission rank and the TPMI to be used for UL transmission to be "4 layer, TPMI = 0," from the correspondence relationship.

According to the second embodiment above, it is possible to appropriately indicate a transmission rank and a TPMI in both of a case of performing either UL transmission using a single TRP and a case of performing UL transmission using a plurality of TRPs.

### <Third Embodiment>

In a third embodiment, a variation of the first and second embodiments will be described.

The UE may assume that a specific higher layer parameter for determining a correspondence relationship between a TPMI codepoint and a TPMI (value) is configured differently between PUSCH transmission using a single TRP and PUSCH transmission using a plurality of TRPs.

For example, the specific parameter may be at least one of a parameter for indicating a UL full power transmission mode(for example, ul-FullPowerTransmission, ul-FullPowerTransmission-r16), a parameter indicating a maximum value of a UL transmission rank (for example, maxRank), a parameter indicating a subset of certain precoding matrix indicators (PMIs) (for example, codebookSubset), and a parameter for indicating a transform precoder (for example, transformPrecoder) .

When the UE is configured with PUSCH transmission using a plurality of TRPs, the UE may employ/use a correspondence relationship between a TPMI codepoint and a TPMI value corresponding to the specific parameter configured for a PUSCH using a plurality of TRPs.

When the UE is configured with PUSCH transmission using a single TRP, the UE may employ/use a correspondence relationship between a TPMI codepoint and a TPMI value corresponding to the specific parameter configured for a PUSCH using a single TRP.

Alternatively, when the UE is configured with PUSCH transmission using a single TRP, the UE may employ/use a correspondence relationship between a TPMI codepoint and a TPMI value corresponding to the specific parameter configured for a PUSCH using a plurality of TRPs.

Each of the embodiments of the present disclosure may be applied to any PUSCH repetition type. For example, each of the embodiments of the present disclosure may be applied to at least one of PUSCH repetition type A and PUSCH repetition type B.

The UE may assume that a specific higher layer parameter corresponding to PUSCH repetition type A (for example, at least one of maxRank, ul-FullPowerTransmission-r16, codebookSubset, and transformPrecoder) and the specific higher layer parameter corresponding to PUSCH repetition type B are the same.

The UE may assume that a specific higher layer parameter corresponding to PUSCH repetition type A (for example, at least one of maxRank, ul-FullPowerTransmission-r16, codebookSubset, and transformPrecoder) and the specific higher layer parameter corresponding to PUSCH repetition type B are different from each other (configured separately).

According to the third embodiment above, it is possible to flexibly perform a configuration of each of UL transmission using a single TRP and UL transmission using a plurality of TRPs.

### <Fourth Embodiment>

In a fourth embodiment, a UE capability will be described. The UE may perform reporting (transmission) about whether the UE has the capability to a NW.

A UE capability related to dynamic switch between PUSCH repetition transmission using a single TRP / single PUSCH transmission and PUSCH repetition transmission using a plurality of TRPs may be defined as whether PUSCH repetition transmission for a plurality of TRPs is supported.

The UE capability related to dynamic switch between PUSCH repetition transmission using a single TRP / single PUSCH transmission and PUSCH repetition transmission using a plurality of TRPs may be defined as whether dynamic switch between a single PUSCH transmission and PUSCH repetition transmission using a plurality of TRPs is supported.

The UE capability related to dynamic switch between PUSCH repetition transmission using a single TRP / single PUSCH transmission and PUSCH repetition transmission using a plurality of TRPs may be defined as whether dynamic switch between PUSCH repetition transmission using a single TRP and PUSCH repetition transmission for a plurality of TRPs is supported.

A maximum value of a transmission rank for PUSCH repetition transmission using a plurality of TRPs may be defined as a UE capability.

A maximum value of a transmission rank for a single PUSCH transmission / PUSCH repetition transmission using a single TRP may be defined as a UE capability.

Whether specific higher layer parameters (for example, at least one of maxRank, ul-FullPowerTransmission-r16, codebookSubset, and transformPrecoder) for a single PUSCH transmission / PUSCH repetition transmission using a single TRP and PUSCH repetition transmission using a plurality of TRPs being different from each other is supported may be defined as a UE capability.

Whether correspondence relationships between a TPMI codepoint and a TPMI value for a single PUSCH transmission / PUSCH repetition transmission using a single TRP and PUSCH repetition transmission using a plurality of TRPs being different from each other is supported may be defined as a UE capability.

Note that each of the embodiments of the present disclosure may be applied under at least one of conditions that the UE reports a UE capability corresponding to at least one of the above to the NW and that at least one of the UE capabilities above is configured for / activated for / indicated to the UE by higher layer signaling. Each of the embodiments of the present disclosure may be applied to a case where a specific higher layer parameter is configured for / activated for / indicated to the UE.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

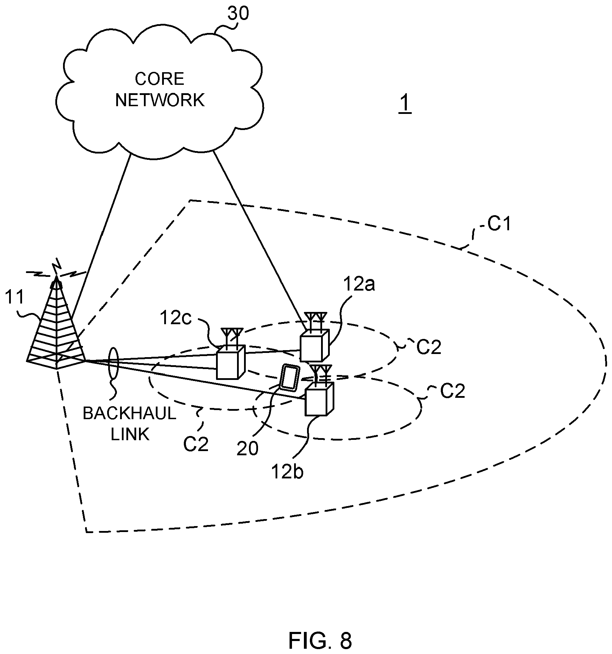

FIG. 8 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations (for example, RRHs) 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

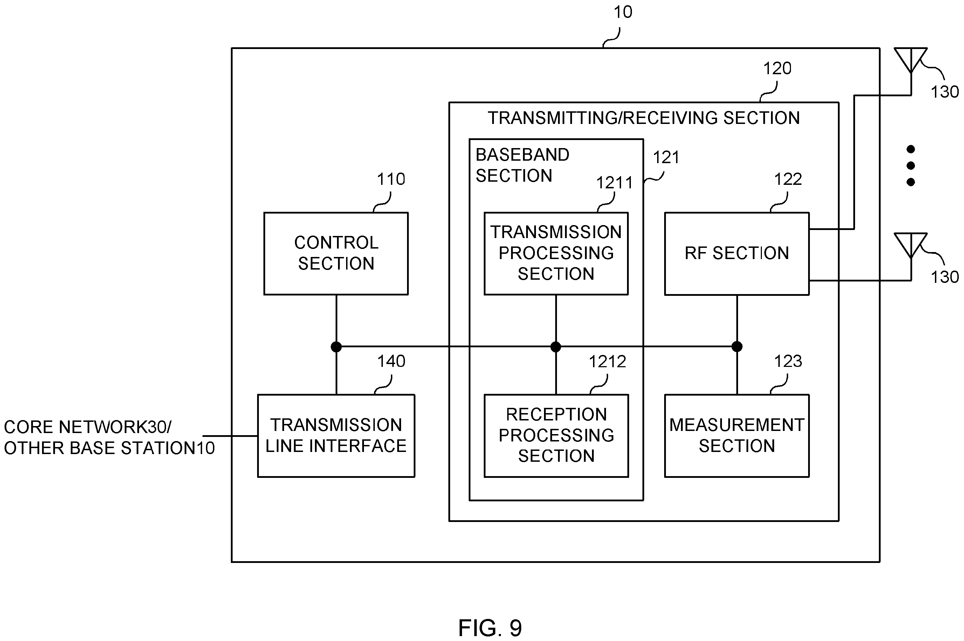

FIG. 9 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit one piece of downlink control information (DCI) for one or more uplink shared channels (Physical Uplink Shared Channels (PUSCHs)). The control section 110 may control, based on one or more pieces of information indicating a transmitted precoding matrix indicator (TPMI) and a transmission rank for the PUSCH included in the DCI, receptions of a plurality of PUSCHs using a plurality of SRS resource indicators (SRIs) or a reception(s) of one or more PUSCHs using a single SRI to which the TPMI and the transmission rank are applied (first and second embodiments).

### (User Terminal)

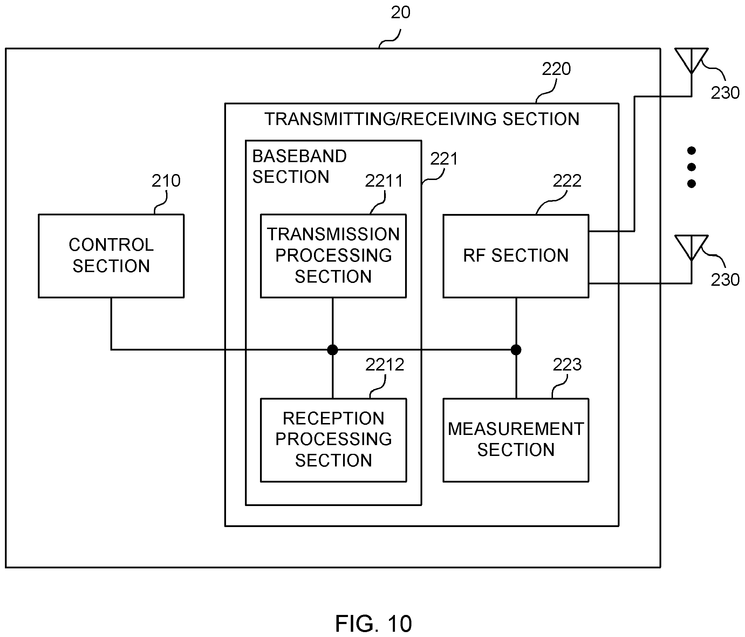

FIG. 10 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive one piece of downlink control information (DCI) for one or more uplink shared channels (Physical Uplink Shared Channels (PUSCHs)). The control section 210 may control, based on one or more pieces of information indicating a transmitted precoding matrix indicator (TPMI) and a transmission rank for the PUSCH included in the DCI, use of the TPMI and the transmission rank for transmissions of a plurality of PUSCHs using a plurality of SRS resource indicators (SRIs) or a transmission(s) of one or more PUSCHs using a single SRI (first and second embodiments).

The control section 210 may determine the use of the TPMI and the transmission rank by using a specific correspondence relationship configured by using higher layer signaling (first and second embodiments).

When the UE (terminal) is configured with the plurality of PUSCH transmissions using the plurality of SRIs, the control section 210 may determine the TPMI and the transmission rank corresponding to each of the plurality of PUSCHs (second embodiment).

When the UE (terminal) is configured with one or more PUSCH transmissions using the single SRI, the control section 210 may determine the TPMI and the transmission rank to be used for the one or more PUSCHs using the single SRI (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

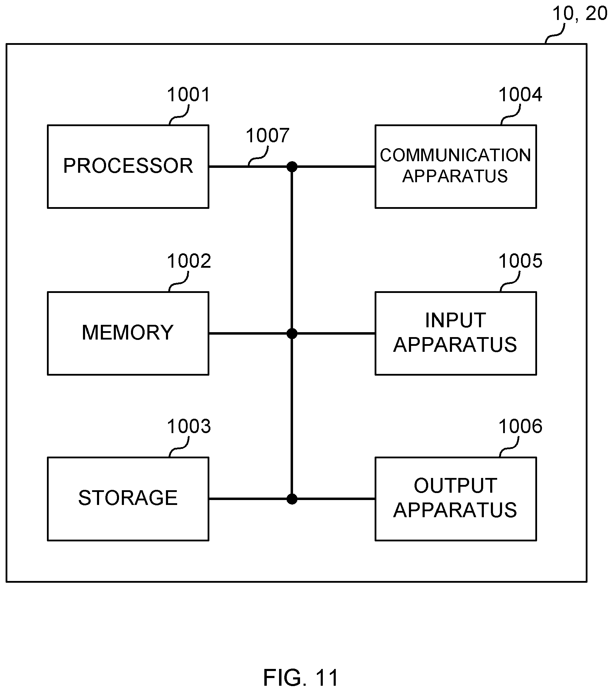

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

This application is based on JP 2021-011131 filed on January 27, 2021. The entire content of this application is incorporated herein.

## Claims

1. A terminal comprising:
a receiving section that receives single downlink control information (DCI) for one or more uplink shared channels (Physical Uplink Shared Channels (PUSCHs)); and
a control section that controls, based on one or more pieces of information indicating a transmitted precoding matrix indicator (TPMI) and a transmission rank for the PUSCH included in the DCI, use of the TPMI and the transmission rank for transmissions of a plurality of PUSCHs using a plurality of SRS resource indicators (SRIs) or a transmission(s) of one or more PUSCHs using a single SRI.

2. The terminal according to claim 1, wherein
the control section determines the use of the TPMI and the transmission rank by using a specific correspondence relationship configured by using higher layer signaling.

3. The terminal according to claim 1, wherein
when the terminal is configured with a plurality of PUSCH transmissions using the plurality of SRIs, the control section determines the TPMI and the transmission rank corresponding to each of the plurality of PUSCHs.

4. The terminal according to claim 1, wherein
when the terminal is configured with one or more PUSCH transmissions using a single SRI, the control section determines the TPMI and the transmission rank to be used for the one or more PUSCHs using the single SRI.

5. A radio communication method for a terminal, the radio communication method comprising:
receiving single downlink control information (DCI) for one or more uplink shared channels (Physical Uplink Shared Channels (PUSCHs)); and
controlling, based on one or more pieces of information indicating a transmitted precoding matrix indicator (TPMI) and a transmission rank for the PUSCH included in the DCI, use of the TPMI and the transmission rank for transmissions of a plurality of PUSCHs using a plurality of SRS resource indicators (SRIs) or a transmission(s) of one or more PUSCHs using a single SRI.

6. A base station comprising:
a transmitting section that transmits single downlink control information (DCI) for one or more uplink shared channels (Physical Uplink Shared Channels (PUSCHs)); and
a control section that controls, based on one or more pieces of information indicating a transmitted precoding matrix indicator (TPMI) and a transmission rank for the PUSCH included in the DCI, receptions of a plurality of PUSCHs using a plurality of SRS resource indicators (SRIs) or a reception(s) of one or more PUSCHs using a single SRI to which the TPMI and the transmission rank are applied.
